# EUROPEAN PATENT SPECIFICATION

(11) **EP 2 545 120 B1**
(45) Date of publication and mention of the grant of the patent: **22.06.2016**
(21) Application number: 11707175.3
(22) Date of filing: 08.03.2011
(51) Int. Cl.: C08L 27/08, C08J 5/18, C08L 67/02

(54) **USE OF A COMPOSITION BASED ON A VINYLIDENE CHLORIDE COPOLYMER TO WRAP GASSING CHEESE**
VERWENDUNG EINER ZUSAMMENSETZUNG AUF DER BASIS EINES VINYLIDENCHLORIDCOPOLYMERISATS ALS VERPACKUNG FÜR GASBILDENDEN KÄSE
UITLISATION D'UNE COMPOSITION À BASE DE COPOLYMÈRE DU CHLORURE DE VINYLIDÈNE POUR L'EMBALLAGE DE FROMAGES À ÉMISSION GAZEUSE

(30) Priority: 10.03.2010 FR 1051731
(43) Date of publication of application: 16.01.2013
(73) Proprietor: SOLVAY SA, 1120 Bruxelles (BE)
(72) Inventor: DEWAEL, Pascal, B-7133 Buvrinnes (BE); CHAPOTOT, Agnès, F-39500 Tavaux (FR); VANDERVEKEN, Yves, B-3001 Heverlee (BE)
(86) International application number: PCT/EP2011/053478
(87) International publication number: WO 2011/110567

(56) References cited:
- EP-A1- 0 530 622
- WO-A1-97/48753
- WO-A1-2006/044113
- WO-A1-2007/013647
- WO-A2-02/31029
- BASF SE: "Techical Leaflet Palamoll 638", , January 2008 (2008-01), XP002602508, Retrieved from the Internet: URL:http://www.plasticizers.basf.com/porta l/streamer?fid=217076 [retrieved on 2010-09-28]

## Description

### Technical Field

The present invention relates to a method for packaging gassing cheese using a film which comprises at least one barrier layer of a composition based on a vinylidene chloride copolymer.

### Background Art

Vinylidene chloride copolymers are known for their remarkable properties as regards permeability to gases and odours. They are thus frequently used for producing articles, in particular single-layer or multilayer films, used for food packaging.

These copolymers have, however, a tendency to decompose under the action of heat and it is therefore advisable to stabilize them by addition of heat stabilizers. Furthermore, in order to process them correctly via extrusion, it is recommended to incorporate suitable plasticizers and stabilizers therein. In so far as some of these additives may have an effect on the barrier properties of these copolymers, it is important to make sure that, after additive addition, they have the required characteristics in terms of permeability to gases and odours, in particular to oxygen and to carbon dioxide. This is especially the case when the nature of the food to be packaged in films manufactured from these copolymers requires a moderate oxygen barrier, combined with a relatively high permeability to carbon dioxide. This is true for certain vegetables, certain meats and, above all, so-called "gassing" cheeses.

It is also important to make sure that the additives used do not migrate through the polymer matrix or, in the case of multilayer films comprising a layer produced using such a polymer, between the layers of said films. In the latter case, these compounds could then disadvantageously reach the surface of the film and thus be in contact with the food packaged therein. Such a situation is not only undesirable from a sanitary point of view but is also undesirable for most of the regulations in the food and medical packaging field. The foregoing therefore reveals the difficulty which may be presented by the selection of additives to be incorporated into the vinylidene chloride copolymers.

Compositions based on a vinylidene chloride copolymer have already been proposed, for the manufacture of controlled-permeability films for the packaging of food products.

For instance WO 2006/044113 discloses articles comprising a monolayer blown film prepared from a composition comprising at least one vinylidene chloride polymer comprising vinylidene chloride and at least one alkyl acrylate selected from methyl acrylate, ethyl acrylate, or butyl acrylate or a combination thereof in an amount of from 2.5 to 9 mole percent and at least one plasticizer in an amount of from 1 to 15 parts by weight per hundred parts of polymer. Amounts of plasticizer of 12 to 15 parts by weight are disclosed for applications such as the packaging of gassing cheese. The plasticizer is selected preferably from epoxidized oils and aliphatic esters and combinations thereof.

IT-A-1168173 discloses compositions which comprise: a copolymer of vinylidene chloride with 5 to 40% by weight of a comonomer chosen from vinyl chloride (preferred), methyl acrylate and ethyl acrylate; 6 to 10% by weight, relative to the weight of copolymer, of a polymeric plasticizer chosen from polyesters derived from at least one difunctional organic acid (such as sebacic, adipic, azelaic and phthalic acids) and a glycol.

According to document EP-A-0712896, a typical commercial composition for the manufacture of films that can be used as packaging for cheese comprises 100 parts by weight of a vinylidene chloride/vinyl chloride copolymer plasticized with 5 parts by weight of the polycondensation product of azelaic acid and 1,3-butanediol, 3 parts by weight of a polyester plasticizer derived from adipic acid and propylene glycol and 1 part by weight of epoxidized soybean oil.

These compositions contain relatively large amounts of polymeric plasticizers which may give rise to several drawbacks:
- a poorly-controlled migration of the plasticizers over time, which results in a variation with time of the oxygen permeability of packaging films manufactured from those compositions;
- in the case of multilayer structures, loss of adhesion with the adjacent layers.

Furthermore, the increase in the amount of comonomer used (vinyl chloride, methyl acrylate, etc.) only slightly reduces the barrier effect and leads to a composition which is amorphous and tacky, whose grain porosity is very low, which is difficult to dry, to transport and to process, and whose residual monomer content is too high.

Document WO 2008/028915 describes a composition based on a vinylidene chloride copolymer for the manufacture of controlled-permeability films, comprising an ε-caprolactone polymer having a molecular weight less than or equal to 10000 g/mol and epoxidized soybean oil.

Document WO 2008/028918 teaches that an ε-caprolactone polymer preformed in a medium other than that of the vinylidene chloride copolymerization may be added to the copolymer preparation medium.

To carry out their role of polymeric plasticizer, the ε-caprolactone polymers must be incorporated in relatively large amounts into the compositions based on vinylidene chloride copolymers intended for the manufacture of controlled-permeability films. Furthermore, when they are incorporated into the vinylidene chloride copolymer preparation medium, the ε-caprolactone polymers sometimes have a tendency to degrade due to their sensitivity to the reaction conditions. This incorporation does not therefore make it possible to satisfactorily solve the problems of migration and degradation of the plasticizer incorporated into these compositions.

The present invention aims to solve these problems by providing a composition of at least one vinylidene chloride copolymer that is characterized by a high thermal stability and which allows films to be produced for food packaging that have the desired compromise in terms of barrier to oxygen and to carbon dioxide, a better stability of the barrier over time and which moreover does not have an additive migration problem.

### Description of invention

For this purpose, a main subject of the invention is a method for packaging gassing cheese using a film which comprises at least one barrier layer comprising a composition comprising:
- at least one copolymer (A) of vinylidene chloride and of at least one comonomer copolymerizable therewith chosen from the group of butyl acrylates;
- from 1 to 20% by weight, relative to the total weight of the composition, of at least one polymeric plasticizer (B) chosen from polyesters derived from the polycondensation reaction of at least one aliphatic polycarboxylic acid and at least one polyhydroxylated aliphatic alcohol.

The expression "at least one vinylidene chloride copolymer" is understood to mean that the composition may comprise one or more thereof. Preferably, it comprises only one vinylidene chloride copolymer.

In the remainder of the text, the expression "vinylidene chloride copolymer" used in the singular or plural should be understood as denoting one or more vinylidene chloride copolymers, except where denoted otherwise.

The expression "vinylidene chloride copolymer" is understood to mean, in the present description, the copolymers for which vinylidene chloride is the main monomer, with at least one comonomer copolymerizable therewith. The expression "at least one comonomer that is copolymerizable with the vinylidene chloride" is understood to mean that the copolymer may comprise one or more comonomer(s). Preferably, it comprises two comonomers. More preferably, it comprises only one comonomer.

In the remainder of the text, the expression "comonomer that is copolymerizable with the vinylidene chloride" used in the singular or plural should be understood as denoting one or more comonomers that are copolymerizable with vinylidene chloride, except where denoted otherwise.

According to the invention, at least one of the comonomers that is copolymerizable with the vinylidene chloride is chosen from butyl acrylates. In the present description, the expression "butyl acrylates" denotes any acrylate corresponding to the empirical formulae C₇H₁₂O₂. Among the acrylates of empirical formula C₇H₁₂O₂, mention may be made of *n*-butyl acrylate, *sec*-butyl acrylate and *tert-*butyl acrylate. Among these *n*-butyl acrylate is more particularly preferred. At least one of the comonomers of copolymer (A) is therefore more particularly preferably *n*-butyl acrylate.

Among the other comonomers that are copolymerizable with the vinylidene chloride and that may also optionally be present in the vinylidene chloride copolymer, mention may be made, non-limitingly, of vinyl chloride, vinyl esters such as for example vinyl acetate, vinyl ethers, acrylic acids and amides, methacrylic acids and amides, acrylic esters (other than the acrylates of empirical formula C₇H₁₂O₂), methacrylic esters (other than the methacrylates of empirical formula C₈H₁₄O₂), acrylonitrile, methacrylonitrile, styrene, styrene derivatives, butadiene, olefins such as for example ethylene and propylene, itaconic acid and maleic anhydride, but also copolymerizable surfactants such as 2-acrylamido-2-methylpropanesulphonic acid (AMPS) or one of its salts, for example the sodium salt, 2-sulphoethylmethacrylic acid (2-SEM) or one of its salts, for example the sodium salt, and the phosphate ester of methacrylate-terminated polypropylene glycol (such as the product Sipomer^{®} PAM-200 from Rhodia) or one of its salts, for example the sodium salt.

The other comonomers that are copolymerizable with the vinylidene chloride and that are optionally present in the vinylidene chloride copolymer are, preferably, vinyl chloride, vinyl esters (in particular vinyl acetate) and acrylic esters (other than the acrylates of empirical formula C₇H₁₂O₂ ) (in particular methyl acrylate).

The vinylidene chloride copolymer (A) present in the composition to be used according to the invention is advantageously a copolymer comprising vinylidene chloride in an amount of more than 50% by weight and at least one comonomer that is copolymerizable with the vinylidene chloride.

Preferably, the amount of vinylidene chloride present in the vinylidene chloride copolymer varies from 55 to 95% by weight, particularly preferably from 70 to 95% by weight and very particularly preferably from 85 to 95% by weight.

Preferably, the amount of comonomer(s) that is (are) copolymerizable with the vinylidene chloride that is (are) present in the vinylidene chloride copolymer varies from 5 to 45% by weight, particularly preferably from 5 to 30% by weight and very particularly preferably from 5 to 15% by weight.

When the vinylidene chloride copolymer present in the composition to be used according to the invention comprises two comonomers that are copolymerizable with vinylidene chloride, one of these comonomers is preferably chosen from the acrylates of empirical formula C₇H₁₂O₂, more preferably *n*-butyl acrylate and, the other, from the group consisting of vinyl chloride, vinyl acetate and methyl acrylate.

Among the vinylidene chloride copolymers comprising two comonomers that are copolymerizable with the vinylidene chloride, those comprising from 85 to 95% by weight of vinylidene chloride and from 5 to 15% by weight of an acrylate of empirical formula C₇H₁₂O₂, preferably of *n*-butyl acrylate, and of a comonomer chosen from the group consisting of vinyl chloride, vinyl acetate and methyl acrylate are preferred. Advantageously, the acrylate of empirical formula C₇H₁₂O₂, preferably *n*-butyl acrylate, represents at least 50% by weight of the total weight of the two comonomers copolymerized with vinylidene chloride.

Among the vinylidene chloride copolymers comprising two comonomers that are copolymerizable with the vinylidene chloride, those comprising from 88 to 92% by weight of vinylidene chloride and from 8 to 12% by weight of an acrylate of empirical formula C₇H₁₂O₂, preferably of *n*-butyl acrylate, and of a comonomer chosen from vinyl chloride, vinyl acetate and methyl acrylate are very particularly preferred. Advantageously, the acrylate of empirical formula C₇H₁₂O₂, preferably *n*-butyl acrylate, represents at least 50% by weight of the total weight of the two comonomers copolymerized with vinylidene chloride.

Among the particularly preferred vinylidene chloride copolymers comprising a single comonomer that is copolymerizable with the vinylidene chloride, those comprising from 85 to 95% by weight of vinylidene chloride and from 5 to 15% by weight of an acrylate of empirical formula C₇H₁₂O₂, preferably *n*-butyl acrylate, are preferred.

The composition to be used according to the invention is therefore more preferably characterized in that the copolymer (A) is a copolymer comprising from 85 to 95% by weight of vinylidene chloride and from 5 to 15% by weight of *n* -butyl acrylate.

Among the particularly preferred vinylidene chloride copolymers comprising a single comonomer that is copolymerizable with the vinylidene chloride, those comprising from 88 to 92% by weight of vinylidene chloride and from 8 to 12% by weight of an acrylate of empirical formula C₇H₁₂O₂, preferably *n*-butyl acrylate, are particularly preferred.

The composition to be used according to the invention is therefore even more preferably characterized in that the copolymer (A) is a copolymer comprising from 88 to 92% by weight of vinylidene chloride and from 8 to 12% by weight of *n*-butyl acrylate.

The vinylidene chloride copolymer (A) that can be used in the composition may be synthesized according to any known method of polymerizing vinylidene chloride and at least one comonomer copolymerizable therewith. Preferably, the polymerization is carried out via a radical route in aqueous dispersion, that is to say, taking place in water in the presence of at least one surfactant having one or more hydrophilic portions and one or more hydrophobic portions in its structure. This hydrophilic/hydrophobic balance allows the surfactant to have an interfacial activity that makes it possible to ensure dispersion and stabilization of the organic phase in the aqueous phase. Optionally, the polymerization in aqueous dispersion may also be carried out in the presence of a basic agent. The expression "basic agent" is understood to mean any material which, when it is added to an aqueous dispersion of halogenated vinyl polymers, renders the aqueous dispersion more basic than it was beforehand. More specifically, the expression "basic agent" is understood to mean any material which, placed in an aqueous solution, gives it a pH greater than around 2.

Among the surfactants, mention may be made of dispersants, also called protective colloids or suspension agents (hereinafter called dispersants), but also emulsifiers.

Among the basic agents, mention may be made of the phosphates that do not have more than one phosphorus atom, and mixtures of these with one another or with another basic agent. Among the phosphates that do not have more than one phosphorus atom, mention may be made, without implied limitation, of trisodium and tripotassium phosphates, disodium and dipotassium phosphates, monosodium and monopotassium phosphates and tetrasodium pyrophosphate.

The optional adjustment of the pH of the aqueous dispersion by means of the basic agent may be carried out both during and after the polymerization, that is to say, in the latter case, at any moment ranging from the copolymerization reactor (autoclave) being degassed and put under vacuum to the moment when the aqueous dispersion is used.

The expression "polymerization in aqueous dispersion" is understood to mean radical polymerization in aqueous suspension, radical polymerization in aqueous microsuspension, radical polymerization in aqueous emulsion and radical polymerization in aqueous miniemulsion.

The expression "radical polymerization in aqueous suspension" is understood to mean any radical polymerization process performed in aqueous medium in the presence of dispersants as surfactants and oil-soluble radical generators.

The expression "polymerization in aqueous microsuspension" is understood to mean any radical polymerization process in which oil-soluble radical generators are used and an emulsion of monomer droplets is prepared by virtue of a powerful mechanical stirring and which is characterized by the presence of emulsifiers as surfactants.

The expression "radical polymerization in aqueous emulsion" is understood to mean any radical polymerization process performed in aqueous medium in the presence of emulsifiers as surfactants and oil-soluble radical generators.

The expression "polymerization in aqueous miniemulsion" is understood to mean any radical polymerization process in which oil-soluble radical generators and/or water-soluble radical generators and also a hydrophobic agent are used and an emulsion of monomer droplets is prepared by virtue of a powerful mechanical stirring and which is characterized by the presence of emulsifiers and optionally dispersants as surfactants.

The polymerization is particularly preferably carried out via a radical route in aqueous suspension.

As examples of dispersants, mention may be made of partially hydrolysed polyvinyl acetates, gelatin, starch, polyvinylpyrrolidone, vinyl acetate/maleic anhydride copolymers, water-soluble derivatives of cellulose ethers such as methyl cellulose, ethyl cellulose, carboxymethyl cellulose, methyl hydroxypropyl cellulose, hydroxyethyl cellulose and hydroxypropyl cellulose.

The expression "oil-soluble radical generators" is understood to mean the radical generators soluble in the monomer or monomers.

As examples of oil-soluble diazo compounds, mention may be made of
- 2,2'-azobis(4-methoxy-2,4-dimethylvaleronitrile);
- 2,2'-azobis(2,4-dimethylvaleronitrile);
- (1-phenylethyl)azodiphenylmethane;
- 2,2'-azobisisobutyronitrile;
- dimethyl 2,2'-azobisisobutyrate;
- 1,1'-azobis(1-cyclohexanecarbonitrile);
- 2,2'-azobis(2-methylbutyronitrile);
- 2,2'-azobis(2,4,4-trimethylpentane);
- 2-phenylazo-2,4-dimethyl-4-methoxyvaleronitrile; and
- 2,2'-azobis(2-methylpropane).

As examples of oil-soluble peroxides, mention may be made of:
- diacyl peroxides such as dilauroyl peroxide, dibenzoyl peroxide and didecanoyl peroxide;
- succinoyl peroxide;
- organic hydroperoxides such as cumyl hydroperoxide and *tert-*amyl hydroperoxide;

- dialkyl peroxydicarbonates such as diethyl peroxydicarbonate, diisopropyl peroxydicarbonate, dimyristyl peroxydicarbonate, dicyclohexyl peroxydicarbonate, di(2-ethylhexyl) peroxydicarbonate, di(4-*tert-*butyl)cyclohexyl peroxydicarbonate and dicetyl peroxydicarbonate;
- peresters such as *t*-amyl perpivalate, *t*-butyl perpivalate, *t*-butyl peroxy-2-ethylhexanoate, *t*-amyl peroxyneodecanoate, *t*-butyl peroxyneodecanoate and cumyl peroxyneodecanoate.

The composition to be used according to the invention also comprises at least one polymeric plasticizer (B) chosen from polyesters derived from at least one aliphatic polycarboxylic acid. These polyesters are advantageously soluble or miscible in the vinylidene chloride. They are preferably liquid at temperatures below about 40°C and not very soluble in water. In the present specification the expression "not very soluble in water" is understood to mean that the water solubility of these polyesters is less than 10 mg/l, preferably less than 1 mg/l. The polymeric plasticizer (B) has a weight-average molecular weight (M_{w}) advantageously between 800 and 10000, preferably between 2000 and 8000, more particularly between 4000 and 7000 (determined by gel permeation chromatography (GPC) with calibration using monodisperse polystyrene dissolved in hexylbenzene, with tetrahydrofuran as eluent, at 35°C and with a flow rate of 0.3 ml/min).

The expression "at least one polymeric plasticizer" is understood to mean that the composition may comprise one or more polymeric plasticizer. Preferably, it comprises one to two polymeric plasticizer(s). Particularly preferably, it comprises only one polymeric plasticizer.

In the remainder of the text, the expression "polymeric plasticizer" used in the singular or plural should be understood as denoting one or more polymeric plasticizers, except where denoted otherwise.

The aliphatic polycarboxylic, preferably dicarboxylic, acids from which the polyester constituting the polymeric plasticizer (B) is derived are advantageously acids in which the saturated or unsaturated, preferably saturated, aliphatic, hydrocarbon-based chain contains from 2 to 20 carbon atoms.

The composition to be used according to the invention is therefore preferably characterized in that the polymeric plasticizer (B) is a polyester derived from an aliphatic polycarboxylic, preferably dicarboxylic, acid, the saturated or unsaturated, preferably saturated, aliphatic, hydrocarbon-based chain of which contains from 2 to 20 carbon atoms.

The saturated or unsaturated, preferably saturated, aliphatic, hydrocarbon-based chain of these aliphatic polycarboxylic, preferably dicarboxylic, acids advantageously contains at least 2 carbon atoms, preferably at least 4 carbon atoms and particularly preferably at least 6 carbon atoms. The saturated or unsaturated, preferably saturated, aliphatic, hydrocarbon-based chain of these aliphatic polycarboxylic, preferably dicarboxylic, acids advantageously contains at most 20 carbon atoms, preferably at most 12 carbon atoms and particularly preferably at most 8 carbon atoms.

Examples of aliphatic polycarboxylic acids from which the polyester constituting the polymeric plasticizer (B) is derived are succinic, glutaric, adipic, pimelic, suberic, azelaic, sebacic, undecanoic and dodecanoic acids and isomers thereof. One particularly preferred aliphatic polycarboxylic acid is adipic acid.

The alcohols having hydrocarbon-based groups that replace the acid hydrogen of the polycarboxylic acids defined above to give, via a polycondensation reaction, the polyester constituting the polymeric plasticizer (B), are chosen from polyhydroxylated aliphatic alcohols.

The composition to be used according to the invention is therefore characterized in that the polymeric plasticizer (B) is a polyester that results from the polycondensation reaction of an aliphatic polycarboxylic acid with at least one polyhydroxylated aliphatic alcohol.

The expression "at least one polyhydroxylated aliphatic alcohol" is understood to mean that the composition may comprise one or more polyhydroxylated aliphatic alcohol.

The polyhydroxylated aliphatic alcohol advantageously contains from 2 to 12 carbon atoms, preferably from 2 to 8 carbon atoms.

Non-limiting examples of polyhydroxylated aliphatic alcohols from which the polyester constituting the polymeric plasticizer (B) is derived, via polycondensation with the acids mentioned above, are diols, such as 1,2-ethanediol (ethylene glycol) and also its dimer (diethylene glycol) and trimer (triethylene glycol); 1,2-propanediol (propylene glycol); 1,2-butanediol, 1,3-butanediol and 1,4-butanediol; 1,3-pentanediol, 1,4-pentanediol and 1,5-pentanediol; 1,6-hexanediol and 1,7-heptanediol.

One particularly preferred polyhydroxylated aliphatic alcohol is 1,2-propanediol.

Advantageously the polymeric plasticizer (B), may additionally be a polyester that results from the polycondensation reaction of an aliphatic polycarboxylic acid with a mixture of monohydroxylated and polyhydroxylated aliphatic alcohols, said polyhydroxylated aliphatic alcohols being as defined above.

Suitable monohydroxylated aliphatic alcohols advantageously contain from 1 to 16 carbon atoms, preferably from 1 to 10 carbon atoms.

Non-limiting examples of monohydroxylated aliphatic alcohols from which the polyester constituting the polymeric plasticizer (B) is derived, via polycondensation with the acids mentioned above, are methanol and ethanol and also the isomers of propanol, of butanol, of pentanol, of hexanol, of octanol and of decanol. One particularly preferred monohydroxylated aliphatic alcohol is *n*-octanol.

Optionally, the hydroxyl groups of the alcohols may be at least partially acetylated, for example by reaction with acetic anhydride.

In a first embodiment, the composition to be used according to the invention is characterized in that the polymeric plasticizer (B) is chosen from the polyesters that result from the polycondensation of adipic acid with 1,2-propanediol.

In a second embodiment the composition to be used according to the invention is characterized in that the polymeric plasticizer (B) is chosen from the polyesters that result from the polycondensation of adipic acid with 1,2-propanediol, the hydroxyl groups of which are partially acetylated.

In a third embodiment the composition to be used according to the invention is characterized in that the polymeric plasticizer (B) is chosen from the polyesters that result from the polycondensation of adipic acid with a mixture of 1,2-propanediol and octanol.

The polymeric plasticizer (B) is present in the composition to be used according to the invention in an amount of 1 to 20% by weight, relative to the total weight of the composition. Advantageously, this polymeric plasticizer (B) is present in an amount of at least 1% by weight, preferably in an amount of at least 2% by weight, particularly preferably in an amount of at least 2.5% by weight. Advantageously, this polymeric plasticizer (B) is present in an amount of at most 20% by weight, preferably in an amount of at most 15% by weight, particularly preferably in an amount of at most 12% by weight and very particularly preferably in an amount of at most 10% by weight.

In addition to the at least one vinylidene chloride copolymer (A) and the at least one polymeric plasticizer (B) as defined above, the composition to be used according to the invention may optionally comprise an epoxidized vegetable oil (C). Preferably, the composition to be used according to the invention comprises, in addition, an epoxidized vegetable oil. The epoxidized vegetable oil (C) may advantageously be epoxidized soybean oil or epoxidized linseed oil. Epoxidized soybean oil is preferred as the epoxidized vegetable oil (C).

The amount of epoxidized vegetable oil (C) present in the composition to be used according to the invention is advantageously between 0.1 and 7% by weight relative to the total weight of this composition.

The amount of epoxidized vegetable oil (C) is advantageously at least 0.1 %, preferably at least 0.5%, and particularly preferably at least 1.5% by weight relative to the total weight of the composition.

The amount of epoxidized vegetable oil (C) is advantageously at most 7%, preferably at most 4%, and particularly preferably at most 2.5% by weight relative to the total weight of the composition.

In addition to (A), (B) and optionally (C), the composition to be used according to the invention may optionally comprise other known compounds (D) that do not have a significant effect on the barrier properties to gases and to odours or on the heat stability during the processing of the composition. Among other known compounds (D) mention may be made of the heat stabilizers, pigment or dyes, UV stabilizers, mineral fillers, lubricants or processing aids, antioxidants and chlorine or oxygen scavengers that are commonly used. These compounds are generally introduced in conventional amounts.

A process for preparing a composition comprising at least one copolymer (A) of vinylidene chloride and of at least one comonomer that is copolymerizable with the vinylidene chloride selected from butyl acrylates; and at least one polymeric plasticizer (B), as defined above, comprises the mixing of (A) and (B) by premixing. The composition may be prepared by mixing (A) with all of (B) by premixing, (B) being introduced in one or more portions, or by mixing (A) that already contains a portion of (B) with the balance of (B) by premixing. When the composition to be used according to the invention additionally comprises an epoxidized vegetable oil (C), (C) may be added to (A) and (B) by premixing or, preferably (A) already contains (C) before the premixing step.

The term "premixing" is understood to mean any method that includes the use of a mixer and that makes it possible to carry out the mixing of the various components of the composition according to the invention.

In this embodiment, it is possible, according to a first method, to use a double-chamber rapid mixer. All of (A) is advantageously introduced into a first heated and stirred chamber. The polymeric plasticizer(s) (B), temperature-conditioned in a subsidiary reservoir, are then advantageously introduced in liquid form when the temperature in the hot chamber reaches the target value. Once the temperature is reached, the mixture is then advantageously transferred into a second cold chamber, also with stirring and which has a jacket in which low-temperature water circulates. The mixture advantageously continues to be stirred therein to a pre-established temperature. During this phase, one or more polymeric plasticizer(s) (B) may also be added. Once the contents of the chamber are cooled, the chamber is emptied.

A second method advantageously uses a slow mixer of the Patterson Conaform^{®} type, composed of a single jacketed chamber, into which vapour may be injected, having a slow rotation and possibly being under vacuum. The steps are quite similar to those of the first method, with introduction of (A) before heating the chamber and addition of the preheated liquid polymeric plasticizer(s) (B) when a certain temperature is reached and after homogenization at a given temperature and for a certain time period, and finally start of the cooling phase during which it is still possible to introduce an additional amount of one or more polymeric plasticizer(s) (B).

This composition may also be prepared according to a procedure involving the incorporation of (B) into (A) during the preparation of (A) by copolymerization of the constituent monomers of (A). When the composition to be used according to the invention additionally comprises an epoxidized vegetable oil (C), (C) is advantageously also incorporated into (A) during the preparation of (A) by copolymerization of the constituent monomers of (A).

Thus, the at least one polymeric plasticizer (B) is advantageously added during the preparation of the vinylidene chloride copolymer by polymerization of vinylidene chloride and of at least one comonomer that is copolymerizable with the vinylidene chloride as defined above. The polymeric plasticizer(s) (B), and optionally the epoxidized vegetable oil (C), may be introduced either at the same time as the raw materials needed for the copolymerization or when the residual monomers are removed from the slurry obtained after reaction, with optional addition of the epoxidized vegetable oil (C).

Preferably, the polymeric plasticizer(s) (B), and optionally the epoxidized vegetable oil (C), are introduced at the same time as the raw materials needed for the polymerization. More preferably, a single polymeric plasticizer (B), and optionally the epoxidized vegetable oil (C), is introduced at the same time as the raw materials. The introduction of the polymeric plasticizer(s) (B), and optionally of at least one portion of the epoxidized vegetable oil (C), at the same time as the raw materials needed for the polymerization may advantageously be carried out, at least partly, in a premixer that precedes the reactor (autoclave) and that feeds it, in which reactor the actual copolymerization of the constituent monomers of (A) is carried out. In this case, the polymeric plasticizer(s) (B) dissolve or mix in the vinylidene chloride in this premixer. As regards the optional (portion of) epoxidized vegetable oil (C) which is not introduced into the premixer, it may be introduced when the residual monomers are removed from the slurry obtained after the reactor is degassed and/or put under vacuum.

The plasticizer(s) (B), the raw materials and optionally the epoxidized vegetable oil (C) are introduced in any order. Thus, the polymeric plasticizer(s) (B) may be introduced: after the raw materials needed for the polymerization and especially the water, the radical generator(s) and the dispersant(s); before the vinylidene chloride and the comonomer(s) copolymerizable therewith and, possibly, before, after or as a mixture with the epoxidized vegetable oil (C). They may also be introduced after the water, before the radical generator(s), the dispersant(s) and the vinylidene chloride and the comonomer(s) copolymerizable therewith and, possibly, before, after or as a mixture with the epoxidized vegetable oil (C). They may also be introduced after the radical generator(s), before the vinylidene chloride and the comonomer(s) copolymerizable therewith, the water and the dispersant(s) and before, after or as a mixture with the additive(s). They may also be introduced after the water, the radical generator(s), the dispersant(s) and possibly at least one portion of the comonomer(s) that are copolymerizable with the vinylidene chloride and as a premix, optionally with the epoxidized vegetable oil (C), at least one portion of the vinylidene chloride and possibly at least one portion of the comonomer(s) copolymerizable therewith; the possible balance of the vinylidene chloride then being introduced after the premix.

The polymeric plasticizer(s) (B) may therefore be introduced independently or as a mixture with the optional epoxidized vegetable oil (C), but also as a mixture with the optional epoxidized vegetable oil (C) and at least one portion of the monomers (vinylidene chloride and/or the comonomer(s) copolymerizable therewith). The latter case is particularly advantageous.

The composition to be used according to the invention may also be prepared by combining the two embodiments described above.

The second embodiment (second variant) of the process, described above, is preferred because it simplifies the preparation of the composition to be used according to the invention.

Articles may be prepared from this composition.

The articles may be films, foils, sheets, single-layer or multilayer films, moulded objects, fibres and filaments. Preferably, the articles are single-layer or multilayer films. These may be shrinkable or non-shrinkable films.

The single-layer or multilayer film preferably comprises at least one, preferably one or two, barrier layer(s) comprising a composition as descrived above.

The film may be a cast film or a blown film. It may be a shrinkable or non-shrinkable film.

A packaging or bag formed from a film as described above.

May be intended for any use. Preferably, it is intended for food packaging.

When it is intended for food packaging, it is preferably intended for packaging cheese or other foods.

More preferably, it is intended for packaging cheese. Even more preferably, it is intended for packaging "gassing" cheeses, that is to say, cheese products whose packaging requires a moderate oxygen barrier, combined with a relatively high permeability to carbon dioxide.

The composition of the vinylidene chloride polymer to be used according to the invention has the advantage of being characterized by the required properties in terms of thermal stability. Additionally the compositions provide films that are characterized by the required properties in terms of oxygen barrier and carbon dioxide barrier, in particular which are characterized by a good compromise between the carbon dioxide barrier and oxygen barrier and also a better stability of the oxygen barrier over time.

The following examples are intended to illustrate the invention without however limiting the scope thereof.

### Determination of the amount of polymeric plasticizer (B) in the compositions of the examples

The amount of polymeric plasticizer (B) in the vinylidene chloride copolymer composition was determined by mass balance.

### Determination of the amount of epoxidized soybean oil (C) in the compositions of the examples

The amount of epoxidized soybean oil in the composition of a vinylidene chloride copolymer was determined by mass balance or by thin-layer chromatography using an epoxidized soybean oil standard. The sample subjected to chromatography was obtained by dissolving the composition of a vinylidene chloride copolymer in tetrahydrofuran; an operation followed by precipitation in methanol. The precipitated part was then filtered and put back into solution in tetrahydrofuran before being subjected to a second precipitation. The two soluble fractions were then brought together and concentrated using an evaporator. The concentrate obtained was subjected to thin-layer chromatography. After migration, a developing agent was used and a densitometry measurement was carried out.

### Measurement of the thermal stability of the compositions of the examples

The principle of the thermal stability measurement consists in processing the vinylidene chloride polymer composition in a mixing chamber so as to analyse its behaviour under stress. This gives a measure of its ability to be used in an extrusion machine.

The machine used for the measurement was a Brabender PL2100 Plasti-Corder machine.

In order to carry out the measurement, the hopper positioned above the mixing chamber of the machine was filled with 95 g of the sample. A pressure was exerted over the hopper using a piston, so that the entirety of the sample was introduced into the mixing chamber. It was possible to track the torque (N/m) on the force dial in order to cease the pressure on the piston. The piston and the hopper were then removed. The introduction of the sample into the mixing chamber constituted the automatic starting point of the test and of the time countdown. The variation of the torque and the material temperature (+/- 5°C with respect to the set-point) were monitored throughout the duration of the test.

A sample was removed at the 6th minute and every 3 minutes afterwards throughout the duration of the test, until 5 to 10 minutes after the change in the slope of the torque. The material removed was then made into a ball shape and put in a press for one minute. The pellet thus obtained was then cut along the diameter using a calibre punch and bonded to the test processing sheet. The decomposition stage was visualized either by a dark brown coloration of the pellet or by a change in the slope of the torque curve. Continuing the test for 5 to 10 minutes after the change of the slope of the torque allowed an easier and more precise determination of the decomposition point and the corresponding temperature. The thermal stability was determined in terms of the time, expressed in minutes, corresponding to the decomposition point.

### General procedure for the production of films from the compositions of the examples

Films were prepared from the vinylidene chloride copolymer compositions in question via the examples that follow.

For this, a three-layer film E/M/E (E = ethylene/vinyl acetate copolymer ESCORENE^{®} UL0909 from Exxon Mobil, M = vinylidene chloride copolymer composition) was produced by coextrusion using two extruders, a feed block with four temperature zones and a 200 × 0.6 mm sheet die. At the outlet of the die, the film was cooled and drawn, to a greater or lesser extent, in the machine direction by a 3-roll calender.

For each vinylidene chloride copolymer composition tested, seven films with thicknesses varying from 10 to 60 µm were produced by varying the drawing rate of the film.

Half of each of these seven films were stored at below 10°C in the fridge (hereinafter called fresh films) and the other half were treated for 2 days at 40°C in an oven and then stored at 23°C and 50% relative humidity (hereinafter called aged films).

### Measurement of the oxygen transmission rate of the films

The principle of the method consists in determining the amount of oxygen which passes through a film of a vinylidene chloride copolymer composition, per unit time and unit area, for a defined temperature and relative humidity.

The film was placed in a cell so that it separates this cell into two. The first part was supplied with oxygen and the second flushed with nitrogen. The oxygen which passes through the film was transported by the nitrogen to the coulometer. The latter thus determined the amount of oxygen per unit time. Knowing the surface area of the cell, the amount of oxygen in cm³ per day and per m² was determined.

The machine used was an OX-TRAN 1000 - H HUMIDICON (Mocon) machine, conditioned at 23°C and 85% relative humidity.

The fresh films were removed from the fridge and placed at 23°C and 50% relative humidity for 24 h before being placed in the various measurement cells of the machine. The value of the oxygen transmission rate of the films (PO2) is noted after 24 h of measurement.

Measurements on the aged films stored at 23°C and 50% relative humidity were carried out as for the fresh films.

The thickness of layer M of the film was measured before carrying out the measurement of the oxygen transmission rate.

The oxygen transmission rate was measured for the seven films with different thicknesses, produced for each vinylidene chloride polymer composition, thus giving 7 oxygen permeability measurements.

A logarithmic regression of the transmission rate as a function of the thickness was then carried out in order to calculate the transmission rate for a standard thickness of layer M of 10 µm.

The value of the oxygen transmission rate for the fresh films (PO2_{fresh}) and that for the aged films (PO2_{40°,2d}) were thus determined. The oxygen transmission rate is therefore expressed in cm³/m².day.atm for a thickness of 10 µm at 23°C.

The ratio [(PO2^{fresh}- PO2_{40°},_{2d})/PO2_{fresh}]×100 (in %) (called delta PO2) was also determined.

### Measurement of the carbon dioxide permeability of the films

The principle of the method is to determine the amount of carbon dioxide which passes through a film of a vinylidene chloride copolymer composition, per unit time and unit area, for a defined temperature and relative humidity.

The film was placed in a cell so that it separates this cell into two. The first part was supplied with carbon dioxide and the second was flushed with nitrogen. The carbon dioxide which passes through the film is transported by the nitrogen to the coulometer. The latter thus determines the amount of carbon dioxide per unit time. Knowing the surface area of the cell, the amount of carbon dioxide in cm³ per day and per m² is determined.

The measurement was made according to the standard ASTM F 2476 in a machine conditioned at 23°C and 0% relative humidity.

The aged films stored at 23°C and 0% relative humidity were placed in the measurement cells of the machine. The thickness of layer B of the film was measured before carrying out the measurement of the carbon dioxide transmission rate.

The carbon dioxide transmission rate was measured for three films with different thicknesses, produced for each vinylidene chloride copolymer composition, thus giving 3 carbon dioxide permeability measurements.

A logarithmic regression of the transmission rate as a function of the thickness was then carried out in order to calculate the transmission rate for a standard thickness of layer M of 10 µm.

The value of the carbon dioxide transmission rate for the aged films (PCO2_{40°,2d}) was thus determined. The carbon dioxide transmission rate is therefore expressed in cm³/m².day.atm for a thickness of 10 µm at 23°C and 0% relative humidity.

### Example 1 (in accordance with the invention)

A copolymer comprising 90% by weight of vinylidene chloride and 10% by weight of *n*-butyl acrylate, to which epoxidized soybean oil (in an amount of 2% by weight relative to the weight of copolymer) had previously been added during polymerization, was mixed (in an amount of 3% by weight relative to the weight of copolymer), by premixing, with a polyester plasticizer that is a product of the polycondensation of adipic acid with a mixture of 1,2-propanediol and octanol, having a weight-average molecular weight equal to 5600 (measured by GPC as mentioned above), sold by BASF under the name PALAMOLL^{®}638, in the manner described below.

The copolymer was placed in a chamber at ambient temperature, stirred at 600 rpm. The temperature of the chamber was then raised to 35°C. When the temperature of 35°C was reached, the polyester plasticizer, preheated to 55°C, was introduced into the chamber. The temperature was then raised to 70°C. When this temperature was reached, the contents of the chamber were discharged to another chamber stirred at 170 rpm and equipped with a jacket in which water circulated allowing the contents of the chamber to be cooled. The temperature of the composition was therefore lowered in this way until it was below 30°C. The composition was then recovered.

Several films were produced according to the general procedure described above from the vinylidene chloride copolymer-based composition thus obtained.

### Example 2 (in accordance with the invention)

Introduced into a 40-litre autoclave with mechanical stirring at 130 rpm and equipped with a jacket, the temperature of which was set at 15°C, were 19058 g of demineralized water. Introduced next were 140 g of lauroyl peroxide and 1820 cm³ of a methyl hydroxypropyl cellulose solution. The stirring was stopped and the autoclave was then deaerated. 1190 g of butyl acrylate were then introduced into the autoclave. A mixture composed of 308 g of epoxidized soybean oil previously fluidized at 40°C, 1428 g of polyester plasticizer PALAMOLL^{®}638 and 8400 g of vinylidene chloride was then introduced into the autoclave. Finally, 4410 g of vinylidene chloride were then introduced into the autoclave.

After introducing the monomers, the stirring was started at 200 rpm, and then the autoclave was heated to 67°C. The polymerization reaction was continued until the desired degree of conversion was reached, as indicated by a pressure drop in the autoclave.

Before opening the reactor, the residual monomers were removed by stripping of the slurry formed. Thus, the stripping was carried out under vacuum (-0.5 bar) at a temperature of 80°C for 5 h. The autoclave was then cooled and drained.

A slurry purified of the residual monomers was recovered, which was then filtered. The copolymer present in the composition resulting from the washing, by spraying with water, and drying, in a fluidized bed, of the filter cake contained 91.5% by weight of vinylidene chloride and 8.5% by weight of *n*-butyl acrylate. The yield was 95% by weight. The composition comprised 2% by weight of epoxidized soybean oil and 9.1 % by weight of the polyester plasticizer, expressed as % by weight relative to the total weight.

### Example 3 (comparative)

A vinylidene chloride copolymer-based composition was prepared as described in Example 1, except that the *n*-butyl acrylate was replaced by methyl acrylate.

Several films were produced according to the general procedure described above from the vinylidene chloride copolymer-based composition thus obtained.

### Example 4 (comparative)

Several films were produced according to the general procedure, from a composition sold by SOLVIN under the name IXAN^{®} PVS 801 and containing:
- a copolymer comprising 90% by weight of vinylidene chloride and 10% by weight of methyl acrylate;
- 5% by weight, relative to the weight of copolymer, of epoxidized soybean oil; and
- 5% by weight, relative to the weight of copolymer, of a plasticizer composed of acetyl tributyl citrate.

### Example 5 (comparative)

Introduced into a 40-litre autoclave with mechanical stirring at 160 rpm and equipped with a jacket, the temperature of which was set at 15°C, were 19197 g of demineralized water. Introduced next where 140 g of lauroyl peroxide and 1680 cm³ of a methyl hydroxypropyl cellulose solution. The stirring was stopped and the autoclave was then deaerated. 1190 g of butyl acrylate were then introduced into the autoclave. A mixture composed of 280 g of epoxidized soybean oil previously fluidized at 40°C, 193 g of an ε-caprolactone polymer sold by Perstorp under the name CAPA^{®}6100 and 8400 g of vinylidene chloride was then introduced into the autoclave. Finally, 4410 g of vinylidene chloride were then introduced into the autoclave.

After introducing the monomers, the stirring was started at 195 rpm, and then the autoclave was heated to 67°C. The polymerization reaction was continued until the desired degree of conversion was reached, as indicated by a pressure drop in the autoclave.

Before opening the reactor, the residual monomers were removed by stripping of the slurry formed. Thus, the stripping was carried out under vacuum (-0.5 bar) at a temperature of 80°C for 5 h. The autoclave was then cooled and drained.

A slurry purified of the residual monomers was recovered, which was then filtered. The copolymer present in the composition resulting from the washing, by spraying with water, and drying, in a fluidized bed, of the filter cake contained 91.5% by weight of vinylidene chloride and 8.5% by weight of *n*-butyl acrylate. The yield was 93% by weight. The composition comprised 2% by weight of epoxidized soybean oil and 1.3% by weight of the CAPA^{®}6100, expressed as % by weight relative to the total weight.

Several films were then produced from this composition according to the general procedure described above.

### Example 6 (sin accordance with the invention)

Introduced into a 40-litre autoclave with mechanical stirring at 130 rpm and equipped with a jacket, the temperature of which was set at 15°C, were 19 058 g of demineralized water. Introduced next were 140 g of lauroyl peroxide and 1820 cm³ of a methyl hydroxypropyl cellulose solution. The stirring was stopped and the autoclave was then deaerated. 1190 g of butyl acrylate were then introduced into the autoclave. A mixture composed of 280 g of epoxidized soybean oil previously fluidized at 40°C, 448 g of polyester plasticizer PALAMOLL^{®}638 and 8400 g of vinylidene chloride was then introduced into the autoclave. Finally, 4410 g of vinylidene chloride were then introduced into the autoclave.

After introducing the monomers, the stirring was started at 200 rpm, and then the autoclave was heated to 67°C. The polymerization reaction was continued until the desired degree of conversion was reached, as indicated by a pressure drop in the autoclave.

Before opening the reactor, the residual monomers were removed by stripping of the slurry formed. Thus, the stripping was carried out under vacuum (-0.5 bar) at a temperature of 80°C for 5 h. The autoclave was then cooled and drained.

A slurry purified of the residual monomers was recovered, which was then filtered. The copolymer present in the composition resulting from the washing, by spraying with water, and drying, in a fluidized bed, of the filter cake contained 91.5% by weight of vinylidene chloride and 8.5% by weight of *n*-butyl acrylate. The yield was 94% by weight. The composition comprised 2% by weight of epoxidized soybean oil and 3.2% by weight of the polyester plasticizer, expressed as % by weight relative to the total weight.

Several films were then produced from this composition, according to the general procedure described above.

The oxygen transmission, carbon dioxide permeability and thermal stability data (determined as described previously) measured in the films obtained are reported below.

Table 1 below shows the oxygen transmission, carbon dioxide permeability and thermal stability data (determined as described previously) of the films obtained according to Examples 1 and 5 and comparative examples 2 to 4.

**Table 1**

| Examples | PO2_{fresh} | PO2_{40°,2d} | Delta PO2 | PCO2_{40°,2d} | Thermal stability (min) |
|---|---|---|---|---|---|
| 1 | 105 | 101 | 5% | 345 | 16 |
| 3 (comp) | 28 | 26 | 7% | 98 | 20 |
| 4 (comp) | 123 | 99 | 20% | 300 | 19 |
| 5 (comp) | 83 | 79 | 5% | * | 20 |
| 6 | 108 | 104 | 4% | 350 | 15 |

| | | | | | |
|---|---|---|---|---|---|
| * Not available. | | | | | |

The results listed in Table 1 show that the compositions to be used according to the invention (Examples 1 and 6) make it possible to obtain films with the desired level of gas permeability (both to oxygen and carbon dioxide) and also having a good compromise of properties [e.g. stability over time of the oxygen transmission rate (Delta PO2) and carbon dioxide permeability (PCO2_{40°},_{2d})] with respect to that of films obtained with the compositions that are not in accordance with the invention of Comparative Examples 3 to 5.

The thermal stability measurements also indicate that the thermal stability of the compositions to be used according to the invention is satisfactory for a commercial use.

## Claims

1. A method for packaging gassing cheese comprising using a film which comprises at least one barrier layer comprising a composition comprising: at least one copolymer (A) of vinylidene chloride and of at least one comonomer copolymerizable therewith chosen from the group of butyl acrylates; and from 1 to 20% by weight, relative to the total weight of the composition, of at least one polymeric plasticizer (B) chosen from polyesters derived from the polycondensation reaction of at least one aliphatic polycarboxylic acid and at least one polyhydroxylated aliphatic alcohol.

2. Method according to claim 1, **characterized in that** at least one of the comonomers of the copolymer (A) is *n*-butyl acrylate.

3. Method according to claim 1 or 2, **characterized in that** the copolymer (A) is a copolymer comprising from 85 to 95% by weight of vinylidene chloride and from 5 to 15% by weight of *n*-butyl acrylate.

4. Method according to any one of claims 1 to 3, **characterized in that** the polymeric plasticizer (B) is a polyester derived from an aliphatic polycarboxylic acid, the saturated or unsaturated, aliphatic, hydrocarbon-based chain of which contains from 2 to 20 carbon atoms.

5. Method according to any one of claims 1 to 4, **characterized in that** the polymeric plasticizer (B) is a polyester that results from the polycondensation reaction of an aliphatic polycarboxylic acid with a mixture of monohydroxylated and polyhydroxylated aliphatic alcohols.

6. Method according to any one of claims 1 to 5, **characterized in that** the polymeric plasticizer (B) is selected from the group consisting of the polyesters that result from the polycondensation of adipic acid with 1,2-propanediol, those that result from the polycondensation of adipic acid with 1,2-propanediol, the hydroxyl groups of which are partially acetylated, and those that result from the polycondensation of adipic acid with a mixture of 1,2-propanediol and octanol.

7. Method according to any one of claims 1 to 6 further comprising an epoxidized vegetable oil (C).

8. Method according to claim 7 wherein the epoxidized vegetable oil (C) is epoxidized soybean oil.

9. Method according to any one of claims 1 to 8, **characterized in that** it comprises a step of preparing the composition comprising mixing of (A) and (B) by premixing.

10. Method according to any one of claims 1 to 8, **characterized in that** it comprises a step of preparing the composition comprising the step of incorporating (B) into (A) during the preparation of (A) by copolymerization of the constituent monomers of (A).

11. Method according to any one of claims 1 to 8, wherein the film is a single-layer or multilayer film.

## Patentansprüche

1. Verfahren zum Verpacken von gasbildendem Käse, umfassend die Verwendung eines Films, der wenigstens eine Barriereschicht umfasst, die eine Zusammensetzung umfasst, die umfasst: wenigstens ein Copolymer (A) von Vinylidenchlorid und wenigstens einem damit copolymerisierbaren Comonomer ausgewählt aus der Gruppe von Butylacrylaten; und von 1 bis 20 Gew.- % bezogen auf das Gesamtgewicht der Zusammensetzung an wenigstens einem polymeren Weichmacher (B) ausgewählt aus Polyestern, die aus der Polykondensationsreaktion von wenigstens einer aliphatischen Polycarbonsäure und wenigstens einem polyhydroxylierten aliphatischen Alkohol abgeleitet sind.

2. Verfahren gemäß Anspruch 1, **dadurch gekennzeichnet, dass** wenigstens eines der Comonomere des Copolymers (A) *n*-Butylacrylat ist.

3. Verfahren gemäß Anspruch 1 oder 2, **dadurch gekennzeichnet, dass** das Copolymer (A) ein Copolymer ist, das von 85 bis 95 Gew.- % an Vinylidenchlorid und von 5 bis 15 Gew.- % an *n*-Butylacrylat umfasst.

4. Verfahren gemäß einem der Ansprüche 1 bis 3, **dadurch gekennzeichnet, dass** der polymere Weichmacher (B) ein Polyester abgeleitet von einer aliphatischen Polycarbonsäure ist, deren gesättigte oder ungesättigte aliphatische Kette auf Kohlenwasserstoffbasis von 2 bis 20 Kohlenstoffatome enthält.

5. Verfahren gemäß einem der Ansprüche 1 bis 4, **dadurch gekennzeichnet, dass** der polymere Weichmacher (B) ein Polyester ist, der durch die Polykondensationsreaktion einer aliphatischen Polycarbonsäure mit einem Gemisch von monohydroxylierten und polyhydroxylierten aliphatischen Alkoholen erhalten ist.

6. Verfahren gemäß einem der Ansprüche 1 bis 5, **dadurch gekennzeichnet, dass** der polymere Weichmacher (B) ausgewählt ist aus der Gruppe bestehend aus Polyestern, die durch die Polykondensation von Adipinsäure mit 1,2-Propandiol erhalten sind, jenen, die durch die Polykondensation von Adipinsäure mit 1,2-Propandiol, dessen Hydroxygruppen teilacetyliert sind, erhalten sind, und jenen, die durch die Polykondensation von Adipinsäure mit einem Gemisch von 1,2-Propandiol und Octanol erhalten sind.

7. Verfahren gemäß einem der Ansprüche 1 bis 6, ferner umfassend ein epoxidiertes Pflanzenöl (C).

8. Verfahren gemäß Anspruch 7, wobei das epoxidierte Pflanzenöl (C) epoxidiertes Sojabohnenöl ist.

9. Verfahren gemäß einem der Ansprüche 1 bis 8, **dadurch gekennzeichnet, dass** es einen Schritt der Herstellung der Zusammensetzung umfassend das Mischen von (A) und (B) durch Vormischen umfasst.

10. Verfahren gemäß einem der Ansprüche 1 bis 8, **dadurch gekennzeichnet, dass** es einen Schritt der Herstellung der Zusammensetzung umfassend den Schritt des Einverleibens von (B) in (A) während der Herstellung von (A) durch Copolymerisation der konstituierenden Monomere von (A) umfasst.

11. Verfahren gemäß einem der Ansprüche 1 bis 8, wobei der Film ein einschichtiger oder mehrschichtiger Film ist.

## Revendications

1. Méthode d'emballage de fromage à dégagement gazeux, comprenant l'utilisation d'un film qui comprend au moins une couche de barrière comprenant une composition comprenant : au moins un copolymère (A) de chlorure de vinylidène et d'au moins un co-monomère copolymérisable avec celui-ci choisi parmi le groupe des acrylates de butyle ; et de 1 à 20 % en poids, par rapport au poids total de la composition, d'au moins un plastifiant polymère (B) choisi parmi les polyesters dérivés de la réaction de polycondensation d'au moins un acide polycarboxylique aliphatique et d'au moins un alcool aliphatique polyhydroxylé.

2. Méthode selon la revendication 1, **caractérisée en ce qu'**au moins l'un parmi les co-monomères du copolymère (A) est l'acrylate de n-butyle.

3. Méthode selon la revendication 1 ou 2, **caractérisée en ce que** le copolymère (A) est un copolymère comprenant de 85 à 95 % en poids de chlorure de vinylidène et de 5 à 15 % en poids d'acrylate de n-butyle.

4. Méthode selon l'une quelconque des revendications 1 à 3, **caractérisée en ce que** le plastifiant polymère (B) est un polyester dérivé d'un acide polycarboxylique aliphatique, dont la chaîne hydrocarbonée saturée ou insaturée, aliphatique, contient de 2 à 20 atomes de carbone.

5. Méthode selon l'une quelconque des revendications 1 à 4, **caractérisée en ce que** le plastifiant polymère (B) est un polyester qui résulte de la réaction de polycondensation d'un acide polycarboxylique aliphatique avec un mélange d'alcools aliphatiques monohydroxylés et polyhydroxylés.

6. Méthode selon l'une quelconque des revendications 1 à 5, **caractérisée en ce que** le plastifiant polymère (B) est choisi dans le groupe constitué par les polyesters qui résultent de la polycondensation d'acide adipique avec du 1,2-propanediol, ceux qui résultent de la polycondensation d'acide adipique avec du 1,2-propanediol, dont les groupements hydroxyle sont partiellement acétylés, et ceux qui résultent de la polycondensation d'acide adipique avec un mélange de 1,2-propanediol et d'octanol.

7. Méthode selon l'une quelconque des revendications 1 à 6, comprenant en outre une huile végétale époxydée (C).

8. Méthode selon la revendication 7, dans laquelle l'huile végétale époxydée (C) est une huile de soja époxydée.

9. Méthode selon l'une quelconque des revendications 1 à 8, **caractérisée en ce qu'**elle comprend une étape de préparation de la composition comprenant le mélange de (A) et de (B) par prémélange.

10. Méthode selon l'une quelconque des revendications 1 à 8, **caractérisée en ce qu'**elle comprend une étape de préparation de la composition comprenant l'étape d'incorporation de (B) dans (A) lors de la préparation de (A) par copolymérisation des monomères constitutifs de (A).

11. Méthode selon l'une quelconque des revendications 1 à 8, dans laquelle le film est un film à couche unique ou multicouches.
